# EUROPEAN PATENT APPLICATION

(11) **EP 1 338 487 A2**
(43) Date of publication of application: **27.08.2003**
(21) Application number: 03251080.2
(22) Date of filing: 21.02.2003
(51) Int. Cl.: B60S 1/34, B60S 1/32, B60S 1/52

(54) **Improvements relating to hose retainers**

(30) Priority: 21.02.2002 GB 0204031
(71) Applicant: Trico Products Company, Rochester Hills, Michigan 48309 (US)
(72) Inventor: Dancer, Nigel, Abergavenny, Gwent NP7 6LZ (GB)
(74) Representative: James, Michael John Gwynne

(57) **Abstract**

A hose retainer defines a channel member 2 and a sleeve formed by a pair of clasps 4 on its lower surface. In use the pair of clasps 4 are slid over the upturned tip of a wiper arm which is held within a retainer sleeve. A water supply hose is then slid into the channel of the channel part 2 (which is of a partially closed U-shaped cross-section). The hose is thus held securely against the wiper arm and can be fed to a spray nozzle mounted on the wiper arm.

## Description

Some windscreen wiper blades have an integral spray nozzle. This is connected to a water supply through a hose which runs along the length of at least part of the wiper blade mounting. Quite often this hose can hang down and thus look unsightly or be at risk of damage. It is an object of this invention to provide some form of retainer means for a wiper arm which will hold the hose securely.

According to the invention there is provided a hose retainer comprising a clip having a sleeve on one face of the clip shaped to fit over a portion of a wiper arm and a channel formed in the other face of the clip shaped to receive and hold a tubular hose.

The invention further extends to a wiper arm assembly comprising a wiper arm, a retainer sleeve holding an end of the wiper arm in place, a hose retainer of this invention as herein before defined, held by said clip onto the wiper arm within the retainer sleeve, and a tubular hose clipped into the channel of the clip.

With such an arrangement the clip is installed on to the wiper arm and thus is located within the retainer sleeve and holds the tubular hose neatly, close against the wiper arm.

The sleeve for the clip is ideally defined by a pair of clasps. The channel itself is preferably of a partially closed U-shaped cross-section. The clip can incorporate a spigot on said one face to fit into a locating hole in a retainer sleeve.

The invention may be performed in various ways and a preferred embodiment thereof will now be described, with reference to the accompanying drawings, in which:-
Figure 1 is a perspective view of a hose retainer of this invention; and
Figure 2 illustrates the incorporation of the hose retainer of Figure 1 into a wiper arm.

The hose retainer shown in the drawings comprises a body part 1 which, on its upper surface, carries a channel member 2. The body part 1 angles upwardly from the point 3 and on its lower surface defines a sleeve formed by a pair of clasps 4. A pair of ribs 5 connect the channel part to the upturned section 6 of the body part 1.

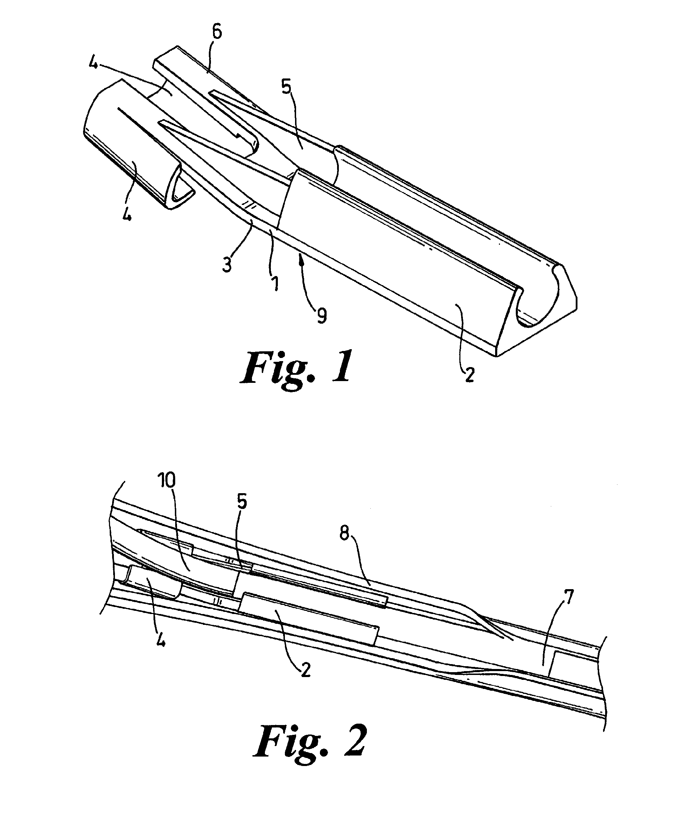

In use the pair of clasps 4 are slid over the upturned tip of a wiper arm 7 (Figure 2) which is held within a retainer sleeve 8. A boss on the underside of the body part 1 (at 9) locates into a recess in the wiper arm 7 to hold the clip in a desired position within the retainer sleeve 8. A water supply hose 10 is then slid into the channel of the channel part 2 (which is of a partially closed U-shaped cross-section). The hose is thus held securely against the wiper arm 7 and can be fed to a spray nozzle mounted on the wiper arm.

The clip is formed from a plastics material and is held in place by the clasps 4 and the boss (9). The tip of the wiper arm 7 is exposed beyond the end of the clasps 4 to enable the end of a spring to be located into a hole in that end of the wiper arm 7. The hose 10 is able to ride up over the mounting for the spring beyond the position where it is retained by the channel portion 2.

## Claims

1. A hose retainer comprising a clip having a sleeve on one face of the clip shaped to fit over a portion of a wiper arm and a channel formed in the other face of the clip shaped to receive and hold a tubular hose.

2. A wiper arm assembly comprising a wiper arm, a retainer sleeve holding an end of the wiper arm in place, a hose retainer as defined in claim 1, held by said clip onto the wiper arm within the retainer sleeve, and a tubular hose clipped into the channel of the clip.

3. A hose retainer or wiper arm assembly as defined in claim 1 or claim 2, wherein the sleeve for the clip is defined by a pair of clasps.

4. A hose retainer or wiper arm assembly as defined in any one of claims 1 to 3, wherein said channel is of a partially closed U-shaped cross-section.

5. A hose retainer or wiper arm assembly as defined in any one of claims 1 to 4, wherein said clip incorporates a spigot on said one face to fit into a locating hole in a retainer sleeve.

6. A hose retainer or a wiper arm assembly of a form substantially as described herein with reference to the accompanying drawings.

7. Any novel combination of features of a hose retainer or of a wiper arm assembly as described herein and/or as illustrated in the accompanying drawings.
